# EUROPEAN PATENT SPECIFICATION

(11) **EP 2 805 367 B1**
(45) Date of publication and mention of the grant of the patent: **21.11.2018**
(21) Application number: 13701034.4
(22) Date of filing: 18.01.2013
(51) Int. Cl.: H01M 4/485, H01M 10/0525, C01G 23/00, H01M 4/58, H01M 4/131, H01M 4/136, C01B 25/45

(54) **METHOD FOR PRODUCING HIGH-PURITY ELECTRODE MATERIALS**
VERFAHREN ZUR HERSTELLUNG VON HOCHREINEN ELEKTRODENMATERIALIEN
PROCÉDÉ DE PRODUCTION DE MATÉRIAUX D'ÉLECTRODE DE GRANDE PURETÉ

(30) Priority: 18.01.2012 DE 102012000914
(43) Date of publication of application: 26.11.2014
(73) Proprietor: Johnson Matthey PLC, London EC4A 4AB (GB)
(72) Inventor: VOGLER, Christian, Singapore 609917 (SG); BAUER, Peter, 84172 Buch am Erlbach (DE); NUSPL, Gerhard, 81543 München (DE); HOLZAPFEL, Michael, 76532 Baden-Baden (DE); GÖKNUR, Ömer, 91054 Erlangen (DE)
(74) Representative: Gee, Rachel Sarah
(86) International application number: PCT/EP2013/050944
(87) International publication number: WO 2013/107861

(56) References cited:
- WO-A1-2011/045050
- CN-B- 101 188 293
- DE-A1-102005 012 640
- US-A1- 2011 068 295

## Description

The present invention relates to a method for producing an electrode material for lithium-ion batteries with a low level of magnetic contaminants.

The basic principle of rechargeable lithium-ion batteries (rechargeable accumulators) is a charging and discharging process of electrochemically active lithium ions, whereby a source voltage is generated and the charge is equalized by the migration of lithium ions. Lithium ions migrate from the cathode to the anode during the charging process. This process is reversed during the discharging process and the lithium ions migrate back to the cathode.

Lithium metal oxygen compounds are used as electrolytes, as anodes and also as cathode material in lithium-ion batteries. As lithium-ion batteries are often used in different ways in power tools, computers, mobile telephones etc. and these demand over more power, the primary objective is to increase the capacity of lithium-ion batteries.

Graphite has often been used as anode material in rechargeable lithium-ion batteries. However, this has the decisive disadvantage that it leads to the formation of a passivating, thermally unstable intermediate layer (SEI = solid electrolyte interface) at the electrolyte boundary surface. Because of this passivating intermediate layer the internal resistance of the lithium-ion battery also increases, whereby extended charging times occur, associated with a reduced power density. In order to avoid these disadvantages anode materials were therefore proposed.

Lithium titanate is also used instead of graphite as anode material today (US 5,545,468A), alternatively nanocrystalline, amorphous silicon or tin dioxide, lithium metal compounds, magnesium molybdates or magnesium vanadates. Further anode materials are found in Bruce, P. G.; Scrosati, B.; Tarascon, J.-M. Angew. Chem. Int. Ed. 2008, 47, 2930-2946.

Lithium titanate, Li₄Ti₅O₁₂ as anode active material, leads to a higher current-carrying capacity compared with the use of graphite, above all during the charging process, and thus to an increase in the capacity of the lithium-ion battery. In addition to these advantages, these lithium-ion batteries also display a high thermal and structural stability, and have a longer life. A further advantage lies in their low toxicity and the associated good environmental compatibility.

Lithium titanates are usually produced by means of solid-state reaction over 3h to 24h, starting from titanium dioxide and lithium carbonate or lithium hydroxide, at from 700°C to 1000°C in air (US 5,545,468A). Depending on the synthesis temperature, titanium dioxide can however still also be contained in the product in various modifications (rutile, anatase). In addition to solid-state reaction, wet-chemical so-called hydrothermal synthesis of lithium titanates is also possible.

In addition to their use as anode material, lithium metal oxygen compounds are also used as cathode material in the further sense. Papers by Goodenough et al. (US 5,910,382) showed that doped and non-doped lithium transition metal phosphates, in particular LiFePO₄, are particularly suitable for use as cathode material. These can be produced by solid-state synthesis or hydrothermally (DE 103 532 66 A1).

A precondition for the use of lithium metal oxygen compounds as electrode material in lithium-ion batteries is that their degree of purity is very high. Therefore, wet-chemical synthesis routes are preferably chosen, since in this way the degree of contamination by non-converted educts can be kept low, in contrast to solid-state methods. However, because of the long drying, annealing and calcining times, large agglomerated particles are obtained (particle sizes from 100 µm to 200 µm) which must be reduced by grinding processes, as only small-particle material in lithium-ion batteries leads to good specific capacity of the lithium-ion battery.

Lithium metal oxygen compounds (by which are meant here lithium titanates and lithium transition metal phosphates) are mostly characterized by a high hardness, there is therefore marked abrasion of the equipment and devices during grinding processes to reduce the agglomerated particles and further method steps which leads to strong magnetic and/or oxidic contamination in the lithium metal oxygen compounds.

These instances of contamination result in the discharge of the lithium-ion battery, as well as in a reduction in specific capacity. They also represent a serious safety risk, as the magnetic and/or oxidic contaminants can lead to internal short-circuits, whereby the self discharge of lithium-ion batteries can be increased, and may even lead to the development of smoke and flames under certain circumstances.

In addition to contaminants resulting from magnetic abrasion of equipment, residues of non-converted educts may also still be contained in the product, which also have a disruptive effect on the operation of the lithium-ion battery.

The removal of contaminants from lithium-containing materials is therefore of great importance, both in order to increase the intrinsic safety of the lithium-ion battery and to increase its specific capacity.

Various purification methods are known from the state of the art. US 3,685,964 discloses a method in which unwanted iron contaminants from aqueous alkali phosphate solutions are precipitated out by adding sulphides, and isolated. This method cannot be used for lithium metal oxygen compounds, as an agglomeration of the particles occurs due to the annealing and the drying, and the grinding steps that are thereby necessary lead to the appearance of magnetic and/or oxidic contaminants.

US 4,973,458 provides a device and a method with which contaminants can be removed from gases by means of agglomeration of the unwanted contaminants and isolation by ceramic filter systems using a fluidized bed. This method is not suitable for isolating magnetic and/or oxidic contaminants from solid lithium metal oxygen compounds because, although these can be vortexed, there is a danger of their thermally induced decomposition.

The isolation of contaminants in solid phase can also be carried out as a function of the particle size (particle size of contaminant > particle size of product) in a sifting process, or using a cyclone. A purified, small-particle product is obtained, while the larger particles of the contaminants are concentrated in a sifting chamber and discarded after the sifting process.

However, once the particle sizes of the contaminant correspond to the particle size of the product as a result of a grinding process, contaminants can be removed only incompletely, as a result of which a large portion of contaminants still remains in the product.

For ground, small-particle lithium metal oxygen compounds, this method is thus not suitable for achieving the necessary degree of purity, because after the grinding treatment the particle size of the contaminant corresponds to the particle size of the lithium metal oxygen compound, and these cannot be isolated by means of a sifting process according to the method described above, as the separation capacity of a sifter or cyclone is no longer adequate.

Lithium iron phosphates often contain contaminants consisting of metallic and/or oxidic particles due to metallic abrasion of devices during processing operations, such as grinding, caused by the hardness of the material. These contaminants in the cathode material also lead to high failure rates of the lithium-ion batteries as self-discharge processes are favoured. The removal of contaminants from lithium iron phosphates is therefore very important.

EP 2 322 473 A1 describes a method which, starting from contaminated lithium iron phosphate, leads to the extensive removal of metallic and/or oxidic particles using a fluid-bed and sifting step. By briefly terminating the grinding process and sifting process, metallic and/or oxidic contaminants can be isolated from the lithium iron phosphate, as for the most part these stay behind in the sifter, and can be isolated and discarded together with a residue of non-converted lithium iron phosphate.

CN 101 188 293 describes a material which is said to provide a material with <1 ppm of magnetic contaminants.

US2011/068295 describes high-purity crystalline ferric phosphate material for use in synthesis of nano-sized LFP cathode material. The ferric phosphate dihydrate material has a molar ratio of phosphorous to iron is from about 1.001 to about 1.05, a surface area of from about 25 m²/g to about 65 m²/g, and is substantially free of metallic or magnetic impurities.

Further different methods for removing contaminants from lithium-containing compounds are known from the state of the art. However, none of the known methods for purifying fine-particulate lithium transition metal oxygen compounds is suitable, as most methods use a mechanical magnetic separation device and the isolation of the contaminants is very ineffective because the particulate magnetic contaminants and the fine-particulate end-product to be purified can usually be separated only with difficulty as a result of the formation of agglomerates.

Thus no fine-particulate lithium transition metal oxygen compounds which are free from magnetic contaminants, are present non-agglomerated and are suitable for direct use as electrode material in lithium-ion batteries are known in the state of the art.

Therefore, it was the object of the present invention to propose a method for providing a fine-particulate lithium transition metal oxygen compound in which the lithium transition metal oxygen compound is obtained free from magnetic contaminants, is present non-agglomerated, contains a small proportion of contaminant and is suitable for direct use as electrode material or solid electrolyte in lithium-ion batteries.

This object is [achieved] according to the invention by a method for producing a mixed fine-particulate lithium transition metal phosphate or lithium titanate (both in summary called lithium transition metal oxygen compound for short) free from magnetic and/or oxidic contaminants as set out in claim 1 comprising the steps of
a) providing starting compounds of the lithium transition metal phosphate or lithium titanate, comprising a lithium source, a transition metal source and a phosphate source or a lithium, titanium and oxygen source, wherein magnetic contaminants as well as undissolved or unsuspended particles are isolated at least from one source,
b) converting the starting compounds to a precursor mixture and/or precursor suspension,
   which is then optionally converted to a lithium transition metal phosphate or lithium titanate compound in the form of a suspension wherein magnetic and optionally oxidic contaminants as well as undissolved or unsuspended particles are isolated from (i) the precursor mixture or suspension and/or (ii) from the lithium transition metal phosphate suspension or lithium titanate suspension,
c) obtaining the lithium transition metal phosphate compound or lithium titanate compound or the precursor mixture and/or precursor suspension which is then thermally treated and from which magnetic contaminants are then removed.

Subsequently a grinding and/or air sifting of the obtained product takes place and after grinding and/or air sifting magnetic contaminants are removed from the product. During the method the removal of magnetic contaminants takes place by means of magnets and wherein removal of the undissolved or unsuspended particles takes place by filtration or sifting by means of filter, screen or strainer.

The starting compounds are provided according to step a), i.e. a lithium source which can be any lithium-containing compound such as e.g. LiOH, Li₂CO₃, Li₂O and a transition metal compound which can be any transition metal-containing compound. In the case of lithium titanate it is mostly TiO₂. These are separately dissolved or suspended, wherein magnetic contaminants as well as undissolved or unsuspended particles are removed from at least one of the solutions or suspensions. Solid and undissolved particles are isolated from the starting solution by mechanical separation methods such as cloth filtration, microfiltration and cross-flow filtration or separation in the centrifugal field. The magnetic particles are isolated from the starting compound in the magnetic field by means of permanent magnetic separators or electromagnets. The respective isolation steps can be carried out with corresponding devices in separate steps. However, a combined isolation of the undissolved or unsuspended solid and/or magnetic particles is advantageous. The combined isolation step can be carried out with corresponding combination equipment for purifying solutions. Such equipment consists of a bag filter which depending on the filter bag used retains all particles up to a maximum size of 1 µm as well as a centrally arranged stainless steel-encased Fe-Nd-B permanent magnetic rod which with a magnetic flux density of up to 10,000 Gauss additionally retains the magnetic particles of any size. The solid and magnetic particles are removed from the equipment by purification, once the equipment has been dismantled and the filter bag rinsed and dried or optionally directly replaced.
Surprisingly it has been shown that by inserting an isolation step of the starting compounds the lithium transition metal oxygen compound can be obtained in a uniform particle size with a D50 value of from 0.1 to 1 µm, particularly preferably of from 0.3 to 0.6 µm and free from solid and/or magnetic contaminants.

### (Isolation step A+B)

Furthermore, solid and magnetic particles can also be isolated from the starting compounds by a mechanical separating method such as wet sieving or separation in the centrifugal field, wherein the particles to be separated are more coarse-grained than the suspended main component and the separating size of the respective separating method is set to a value between the two fractions. This isolation step is carried out at a low coarse-particle load of the suspension to be purified most simply through a strainer. A strainer is also used to protect against foreign bodies in pumps. A suitable screen insert with a specific mesh size of e.g. 250 µm is fitted into an associated piece of tube and inserted into a section of tube or pipe via suitable connection pieces. The screen insert is cleaned by being removed, rinsed or cleaned with compressed air. Depending on the coarse-particle load and the contaminants in the solution or suspension, the screen insert must be removed at corresponding intervals and cleaned in order that not too large a loss in pressure results at the strainer. Depending on the area of the cross-section, flow rate and allowable loss in pressure, strainers with mesh sizes of between 100pm and 500pm can be used. Those with a mesh size of 250pm have proved particularly expedient in most cases.

Furthermore cross-flow filtration, microfiltration, ultrafiltration, nanofiltration, precoat filtration, vacuum filtration, pressure filtration, layer filtration, membrane filtration, sterile filtration, surface filtration, deep filtration, or reverse osmosis can also be used to isolate contaminants.

However, any other equipment for isolating particles can also be used. If the coarse-particle load in the solution is too large or if a particularly small loss in pressure is required, then correspondingly modified equipment can also be used by replacing the filter bag with a wire cloth net with a mesh size of e.g. 250 µm. This has the advantage that the absorption capacity and the screen surface area thereby increase and thus the loss in pressure in the strainer is reduced, whereby premature blockage of the net occurs less easily. It is advantageous that any mesh sizes can be used for the wire cloth net, and thus a very thorough isolation of the particles from the suspension takes place.

The starting compounds containing the lithium and the transition metal source and optionally a phosphor source are converted to a precursor mixture and/or precursor suspension according to step b). Starting from the precursor mixture in an embodiment this is then converted to a lithium transition metal phosphate or lithium titanate compound which is present in the form of a suspension from which magnetic and/or oxidic as well as undissolved or unsuspended particles are isolated. The conversion of the starting compounds takes place preferably over a period of 1h to 30h. During the reaction the precursor suspension can be continuously intensively dispersed and stirred with the help of a disperser in order thus to prevent the agglomeration of the resulting crystallites and to obtain fine-particulate product.

In a further embodiment of the method according to the invention the precursor mixture or suspension is not converted immediately to end-product.

The suspension of the precursor mixture and/or of the lithium transition metal oxygen compound is treated as described in isolation step C. The coarse-particle load is removed from the precursor mixture and/or the lithium transition metal oxygen compound by isolation with a strainer, wherein any other mechanical isolation of the solid and magnetic particles can be used.
Magnetic particles are removed from the suspension by a magnet, wherein electromagnets or permanent magnets can be used here.

According to the invention the lithium transition metal oxygen compound which was obtained according to step c) is subjected to a thermal treatment and then the magnetic contaminants are removed from it. In the embodiment described further above the precursor mixture/suspension is isolated in step c) and subjected to thermal treatment, whereby the corresponding end-product, i.e. the lithium titanate or lithium transition metal phosphate, is obtained. It is understood that the method according to the invention is suitable in principle also for the synthesis of other lithium transition metal oxide compounds such as the LiₓM_{y}O_{z} compounds described below.

To isolate solid and magnetic particles from the precursor mixture and/or the lithium transition metal oxygen compound a combined apparatus with magnetic rod attachment can also be used analogously to isolation step C. However, the separation effect of the magnetic rods decreases with the viscosity of the suspension, whereby the separation effect of an individual magnetic rod around which a flow has taken place is no longer sufficient for isolating the magnetic particles. As the viscosity of the suspension increases it is more difficult to align and deflect the magnetic particles to be isolated parallel to the magnetic field lines and transverse to the flow direction to the magnets. The isolation power can be increased by widening the flow cross-section using multiply arranged magnet components. The flow rate and simultaneously the maximum path length of the magnetic particles to be separated off transverse to the flow direction is thereby reduced, whereby a very good separation effect also results in viscous suspensions. For this devices customary in the trade can be used with which magnetic particles can be isolated from the suspension during the flow process. Devices which can for example be used for this are all types of magnetic separators, with movable or rigid magnet components, through which liquids can flow. Magnetic separators from the Eriez B or T series with 5 to 17 parallel magnetic rods or those from the Eclipse Magnetics ILF series with 7 to 9 parallel magnetic rods, arranged transverse to the suspension flow, are particularly advantageous, selected depending on the power cross-section.

These consist of a piece of tube through which the suspension flows slowly while the magnetic particles are isolated via the integrated magnets. Using corresponding suitable connection pieces this device is inserted into a section of tube or pipe through which the suspension is conveyed. A specific number of metal-encased magnetic rods of specific magnetic flux density are arranged parallel in this piece of tube. The number of magnetic rods is increased or reduced depending on the viscosity of the suspension. Stainless steel-encased magnetic rods are preferably used for this, wherein the magnetic rods can be provided with any other casing, optionally even with Teflon, plastic or other non-reactive protective casings. Preferably, Fe-Nd-B bar magnets are used with a magnetic flux density of up to 10,000 Gauss. The magnetic particles to be separated off collect on the magnetic rods. To isolate the magnetic particles from the suspension the magnetic rods are removed from the suspension and cleaned by rinsing or wiping.

Preferably alloys such as Fe-Nd-B are used as permanent magnets, and therefore preferably used in the isolation step according to the invention for isolating the magnetic particles from lithium transition metal oxygen compounds. This is in particular the case as they have the highest magnetic flux densities and no permanent magnet alloys which have higher flux densities are currently known in the state of the art. However, it is disadvantageous that the alloys are susceptible to corrosion. In order to protect them from this as well as from chemical attack these are normally protected with different casings. Metal casings, in particular stainless steel, Teflon, various acid-resistant or non-acid-resistant plastics are suitable for this.

In a preferred embodiment the bar magnets are encased with a plastic casing which can be removed together with the magnetic particles adhering thereto. The plastic casing can be reusable by having the magnetic particles removed by rinsing or wiping, and being ready for use again. By removing and disposing of the casing including the magnetic particles, however, the risk that residual particles remain stuck to the casing and enter the suspension to be purified when reused is minimized. Using a plastic casing is advantageous as, when removing the protective casing from the bar magnets, the magnetic particles automatically come away from the casing, or can be rinsed off, and thus the contact with the magnetic particles can be kept very small (isolation step D).

According to the invention, in the method according to the invention not only in the physical sense alone are double-pole bar magnets used, but by permanent magnetic rods is meant any rod-shaped device made of permanent magnetic components. For example, such a permanent magnet can also consist of a large number of double-pole magnets arranged disk-shaped which are always lined up rod-shaped with the same poles next to one another to reinforce the magnetic field and encased. In this instance the rod shape is not necessarily prescribed, any other shape which better corresponds to the device and the corresponding requirements can be realized here. A magnetic rod constructed from a large number of disk-shaped dipoles has the decisive advantage that, because of the adjoining in each case of the same poles, a large number of curves of magnetic field lines with a large number of possible points with high magnetic field density on magnetic field lines spreading out on the surface arise which are suitable for the preferred accumulation of magnetic contaminants as the magnetic field is particularly strong here.

Not only can permanent magnetic alloys such as Fe-Nd-B be used but the use of electromagnets is also suitable. The use of electromagnets has the advantage that the live coils can be switched on and off arbitrarily. Wherein, during the isolation effect, the separation of the magnetic particles takes place on the magnets. If the magnets are switched off the magnets can be cleaned by a brief rinsing without having to remove them from the apparatus which further saves time and cost. This is then particularly advantageous if work is to take place with air excluded as thus the apparatus or device can remain closed during cleaning, while the cleaning of the magnets is nevertheless guaranteed.

The conversion of the precursor mixture into a lithium transition metal oxygen compound can take place optionally under hydrothermal conditions. This is carried out at temperatures between 100 and 160°C and a pressure of 1 to 6 bar. A pressure-resistant autoclave with dip tube as supply, bottom outlet valve as drain as well as various stirring mechanisms for dispersing, grinding and mixing the product is suitable for this as reaction vessel. Furthermore it is advantageous if the autoclave can be operated with a feed of inert gas, for example nitrogen, helium or any other gas, or to guarantee a non-oxidizing atmosphere is also equipped with a vacuum device. For laboratory scale operation for example a Parr 4550-type pressure reactor is suitable for this. The described filtration and separation techniques under isolation step b) can be carried out according to the invention as often as required on the lithium transition metal oxygen compound and in different method steps as long as the lithium transition metal oxygen compound is in suspension.

### Isolation step C):

The lithium transition metal oxygen compound firstly obtained as suspension is obtained as solid after isolation of the liquid phase or drying. This solid is usually present as bulk product, e.g. in the form of a powder or granules, pellets or extrudates in any shape. The lithium transition metal oxygen compound can be present in the bulk product in pure form or mixed with other raw materials and excipients, e.g. with carbon or carbon precursors. The bulk product is subjected to one or more magnetic separation processes in isolation step C and magnetic contaminants are thus removed from it. These magnetic separation steps can concentrate on the ready-to-use end-product, but can also be arranged particularly advantageously before and after various upstream bulk product method steps, for example and not exclusively after drying steps (e.g. spray or drum-type drying), before and after shaping processes (e.g. granulation), before and after thermal treatment steps such as e.g. calcining or pyrolysis processes and before and after reduction steps such as e.g. grinding in an air-jet mill. For magnetic separation any equipment that seems suitable to a person skilled in the art with electromagnetic or permanent magnetic, movable or rigid magnet components can be used.

Fe-Nd-B permanent magnetic rods, preferably encased corrosion-protected with stainless steel, with a flux density of up to 10,000 Gauss have proved particularly advantageous and simple to use for isolating magnetic particles from the solid granular material, powder etc. The permanent magnet is mounted lengthways in a stainless steel tube which is inserted into a vertical downcomer via suitable connection pieces. The granular material to be purified precipitates from a dosing device, for example a rotary valve, a dosing screw or a vibrating chute, attached on top, in a comparable flow of bulk product past the separating magnet. Thus the freely precipitating magnetic particles are deflected transverse to the precipitation flow and parallel to the magnetic field lines from their precipitation movement and fixed to the magnet, whereby very simply a majority of the magnetic particles contained can be removed from the lithium transition metal oxygen compound. It is advantageous that this cleaning device can be very easily integrated anywhere. The device is dismantled for cleaning and the magnetic rod wiped with a clean cloth and the magnetic particles thus removed. This isolating step makes possible the removal of the magnetic particles from the dry product. It is advantageous that this step can be very easily integrated into the production line. Preferably a magnet with plastic casing can also be used here which makes isolating the particles and cleaning the magnet easy.

Magnetic contaminant particles are removed from transition metal oxygen compounds or bulk products containing same in particularly fine-powdered, cohesive form, tending towards agglomerating and bridging, only insufficiently in isolation step C according to the invention if they are guided past the magnetic separator in the precipitation flow as described above. Advantageously they are instead guided past the magnetic separator in fluidized form. For this, the fine-particulate product is placed into a pneumatic source vessel or a fluidized bed chamber in turn via a rotary valve, a dosing screw etc., fluidized there in preferably dry air or inert gas and, to isolate the particles, fed to the magnets as pneumatic delivery flow. Thus on the one hand blocking as a result of bridging is avoided, and on the other hand agglomerates in which there may still be magnetic contaminants which could be bonded such that they would not be captured by the separating magnets within the agglomerates are destroyed. Thus a fine-particulate product without agglomerates and free from magnetic particles can be provided which is suitable in conjunction with direct use as electrode material in lithium batteries.

A carbon-containing compound can also be used in step a) of the method according to the invention. It is advantageous if a carbon-containing compound is already added before reaction with the starting mixture, educt solution or precursor mixture as the carbon is distributed evenly as layer or integrated with the particles that form (composite material) and further steps are then no longer necessary for producing a carbon coating. Furthermore a later cleaning is thus dispensed with as excess and overly coarse-particle carbon is isolated already with other contaminants.

Mixing with carbon-containing compounds can take place also firstly in step c) by mixing the obtained, already purified lithium transition metal oxygen compounds with a carbon-containing additive. This is particularly advantageous if the carbon of a coating is to be applied immediately, rather superficially to the product.

Advantageously, magnetic and/or solid and/or oxidic contaminants as well as undissolved or unsuspended particles can also be isolated from the lithium source or transition metal source, as well as the precursor mixture mixed with a carbon compound. Thus the mixture is already purified, and no excess carbon contaminants such as for example elemental carbon or a carbon compound are carried over into later reactions.

At least in areas the particles of the lithium transition metal oxygen compound can have a carbon-containing coating. This can be achieved by mixing with carbon-containing compounds after formation of product particles. In further embodiments of the invention the surface of the particles or at least of most of the particles is typically completely covered with a continuous coating of carbon obtained by means of pyrolysis of a carbon-containing material (see e.g. EP 1049182 B1), so-called "pyrocarbon".

The term "pyrocarbon" denotes an uninterrupted, continuous layer of non-crystalline carbon which has no discrete carbon particles. The pyrocarbon is obtained by heating, i.e. pyrolysis of precursor compounds at temperatures of below 1500°C, preferably below 1200°C and more preferably of below 1000°C and most preferably of below 800°C. At higher temperatures of in particular > 1000°C an agglomeration of the particles on the mixed lithium metal oxides due to so-called "fusion" often occurs, which typically leads to a poor current-carrying capacity of the composite material according to the invention. Important here is only that no crystalline ordered synthetic graphite forms, the production of which requires temperatures of at least 2800°C at normal pressure.

Typical precursor compounds are for example carbohydrates such as lactose, sucrose, glucose, polymers such as for example polystyrene butadiene block copolymers, polyethylene, polypropylene, aromatic compounds such as benzene, anthracene, toluene, perylene as well as all other compounds known as suitable per se for the purpose to a person skilled in the art.

The calcining can be carried out in air or under protective gas. During calcining, the carbon layer can be obtained for example from the carbon compound in the form of pyrocarbon. In other embodiments, the obtained product is steeped, before or after the calcining, with a solution of a carbon precursor compound, e.g. lactose, starch, glucose, sucrose etc., and then calcined, whereupon the carbon coating forms on the particles of the lithium transition metal oxygen compound. By already isolating magnetic and/or solid contaminants before converting the mixture, a product is obtained which contains even fewer solid and magnetic contaminants.

In the method according to the invention, the isolated product, the lithium transition metal oxygen compound, is subjected to a thermal treatment which includes a step of drying the mixture. The drying step can be carried out at low temperatures of from 70 to 150°C, particularly preferably at temperatures of from 70° to 100°C.

After the drying step a granulation step can follow in order to obtain a dust-free interim product for further processing. On the one hand, wet granulation with water or other liquid media, either as "wet-in-dry" or "dry-in-wet" or also as combined variants, comes into consideration as technique here.

These can for example take place by means of a roller table, a vertical stirring mixer (e.g. a so-called baking mixer or an Eirich mixer, by means of a horizontal stirring mixer (e.g. Lödige mixer), or in a fluidized bed (e.g. Glatt fluidized bed granulators). On the other hand dry granulation also comes into consideration for the granulation step, for example by means of roller compactors and subsequent reduction or by means of spherical-cap presses or tablet presses. In the first example a uniform edge granule is obtained, normally from the scabs obtained in the roller compactor in undefined shape, by gentle reduction, e.g. in a screen rotary mill, and then screening off the desired particle-size fraction. In the other two examples uniformly shaped spherical or cylindrical shaped bodies are obtained directly. This means the roller compactor has a greater throughput and is more economical. Dry granulation of the lithium transition metal oxygen compounds saves more energy than wet granulation as the granular material need not be dried subsequently.

Lithium transition metal oxygen compounds are characterized mostly by a high grinding hardness, therefore in reduction steps of the particles mostly high friction which leads to large metallic and/or oxidic contaminants in the lithium transition metal oxygen compounds occurs on the equipment and devices. The steps of reducing the particles customary and required in the state of the art can be greatly reduced by the method according to the invention. As the particles are already present as very fine particles only a small amount of force is necessary to separate the slightly agglomerated particles from each other, whereby the proportion of new contaminants can be greatly reduced by friction etc.

A further advantage of the method according to the invention over the customary representation methods for lithium transition metal oxygen compounds is that the calcining step following on from the granulation step can be carried out already at lower temperatures. Carbon-containing lithium transition metal oxygen compounds are readily treated at high temperatures between 500 - 1000°C as thus a surface layer of pyrocarbon forms on the individual particles.

Normally very high temperatures of at least 800°C are applied over long periods of time in the state of the art for calcining lithium transition metal oxygen compound. Because of the phase purity of the lithium transition metal oxygen compounds the required calcining temperature can be greatly reduced. Unlike the state of the art temperatures of only < 750°C, < 600°C, preferably < 500°C are necessary here.

A grinding and/or air sifting of the obtained product can take place in step c) of the method according to the invention. The steps of grinding and air sifting can be carried out in one step, i.e. in a device, or likewise in devices suitable for the method separated from one another.

In a preferred embodiment the grinding takes place by means of a fluidized-bed process or a fluid-bed process in a fluidized-bed chamber or in a fluid-bed chamber, in which, using eddying or fluidizing air flows or gas flows which can be introduced into the fluidized-bed chamber via nozzles or by means of distributor systems, particles are isolated according to their size and density. Furthermore, the lithium transition metal oxygen compounds can be ground by means of tube, roller and high compression roller mills.

The sifting process can take place using a sifter, fitted with a sifting chamber, a sifting nozzle, by which a sifting stream is produced, as well as a sifting rotor. The step of air sifting of the lithium transition metal oxygen compound in the method according to the invention can be carried out using various devices, for example air sifter, cyclone, cyclone sifter or cyclone separator may be named.

In a particular embodiment the method according to the invention can comprise a further grinding step. The further grinding step serves to deagglomerate residual agglomerated particles which result from partial sintering in the annealing or calcining steps in order to obtain small-particle lithium transition metal oxygen compounds which are preferably used as electrode material. As the reduction of the size of the batteries plays an important role, the provision of small-particle electrode material is particularly important. The use of small-particle lithium transition metal oxygen compounds as electrode material thus makes possible a higher battery capacity while maintaining the same volume.

In a further embodiment the grinding step takes place in a device separate from the grinding device and/or sifting device. The grinding step can be carried out using a jet mill, but any other grinding device, such as for example ball mill, mixer ball mill, planetary mill, centrifugal mill, mortar, Majac counterjet mill, pinned-disk mill, screen rotary mill, spiral jet mill, oval tube jet mill, fluid-bed counterjet mill, jet mill with baffle plate or Finnpulva counterjet mill, can be used. Agglomerated particles of the lithium transition metal oxygen compound can be ground further by fine grinding, micronizing or cryogenic grinding.

In a special embodiment the grinding step takes place in a device which is fitted with both a fluidized-bed chamber, a sifting chamber and also optionally with a grinding device. Any device in which the method according to the invention can be carried out can be used for this. The AFG 200 fluid-bed counterjet mill of Hosokawa Alpine AG, Augsburg, Germany may be named here by way of example.

In the method according to the invention magnetic contaminants are also removed from the product i.a. by grinding and/or air sifting. The lithium transition metal oxygen compound is ground in a fluid-bed counterjet mill with sifting wheel while solid, hard-to-grind contaminants and/or magnetic contaminants are simultaneously isolated.

It was surprisingly found that magnetic and/or solid contaminants in lithium transition metal oxygen compounds can be isolated by the steps of grinding and sifting with continuous removal and obtaining of the purified lithium transition metal oxygen compound, and purified, small-particle lithium transition metal oxygen compounds are thus obtained. The grinding process and sifting process is prematurely terminated before the lithium transition metal oxygen compound used is completely converted, and before the quantity of unconverted lithium transition metal oxygen compound is less than roughly 1% of the quantity m used. Following premature termination of the grinding process and sifting process, an unconverted residue of roughly 1% of the quantity m used, consisting of magnetic and/or solid contaminants, is discarded.

This principle can also be realized in any manner suitable for a person skilled in the art in a continuous sifting or grinding and sifting process by for example providing the grinding or fluidized-bed chamber with an automatic or manual discharge unit, e.g. a flap, which removes the respective contents of the chamber by repeated brief opening and is controlled by time or according to quantity, such that a total of roughly 1% of the whole ground product is removed and discarded in this way.

Surprisingly, the purified lithium transition metal oxygen compounds obtained by the method according to the invention are so pure and have such small particles that they can be used as electrodes in batteries without further reduction steps.

Surprisingly, even small-particle magnetic and/or solid contaminants can be isolated from small-particle lithium transition metal oxygen compounds by the step of the combined grinding, sifting and isolating, although the particle sizes of the contaminants are small and only traces of contaminants still remain in the lithium transition metal oxygen compound.

Thus a purified lithium transition metal oxygen compound is obtained in particle form which has a very small proportion of magnetic and/or solid contaminants, is simultaneously present as small particles, whereby the intrinsic safety and capacity is increased accompanied by simultaneous reduction in the volume of the battery, and the lithium transition metal oxygen compounds according to the invention are therefore particularly suitable for use as electrode material. If lithium transition metal oxygen compounds which are free from contaminants and have a small particle size are used as electrode material for batteries, then the life of the battery is increased many times.

Preferably, the lithium transition metal oxygen compound is subjected to a grinding process and sifting process while removing the purified lithium transition metal oxygen compound until the residue is 3% to 0.01% of the quantity m, preferably 2% to 0.5% of the quantity m, preferably 1% of the quantity m. The proportion of residue should be kept as small as possible as this also contains, in addition to magnetic and/or solid contaminants (see above), some lithium transition metal oxygen compound which is discarded with the contaminants and thus leads to losses, but not chosen too small, as too long a grinding and sifting of the material results in an increase in the proportion of unconverted contaminants.

According to the invention the grinding process and sifting process is terminated before the residue is less than 3% to 0.01% of the quantity m, preferably 2% to 0.5% of the quantity m, preferably 1% of the quantity m. Observing the given limits leads to particularly good isolation of the magnetic and/or solid contaminants from the lithium transition metal oxygen compound.

Within the framework of the present invention the residue of from 3% to 0.01% of the quantity m, preferably 2% to 0.5% of the quantity m, preferably 1% of the quantity m, is removed and discarded after termination of the grinding process and sifting process, as it contains the magnetic and/or solid contaminants in concentrated form.

According to the invention each individual isolation step can be carried out repeatedly or in various combinations in different sequences. An isolation step can be carried out repeatedly while varying the conditions such as for example filter particle size, or grinding tool, and always small-particle contaminants can be isolated, whereby a small-particle and purified product is obtained.

Subsequently, a lithium transition metal oxygen compound free from magnetic and solid particles is obtained by the method according to the invention which can be directly packed and used and which optionally also contains carbon and is present doped.

The isolation of the magnetic contaminants takes place according to the invention mostly by means of magnets.

Magnetic contaminants are, within the meaning of the invention, ferromagnetic oxidic and metallic contaminants.

As already said, permanent magnets and/or electromagnets can be used as magnets in different shapes which are advantageous for the invention, such as in rod shape or disk shape.

However, the strength of the magnetic field is of decisive importance. The strength of a magnetic field will be expressed by two different physical values, the magnetic field strength *H* (unit: A/m) and the magnetic flux density *B* (unit: Tesla).

The magnets used are permanent magnets, because after magnetization they maintain the latter for a long time. Various metallic alloys of iron, nickel and aluminium with additions of cobalt, manganese and copper are used. Ceramic materials such as e.g. barium or strontium hexaferrite can also be magnetized. Particularly strong magnets are produced in the sintering method starting from rare earths such as for example samarium-cobalt or neodymium-iron-boron which have magnetic flux densities of up to 10,000 Gauss, and are therefore suitable particularly for isolating the magnetic contaminants from lithium transition metal oxygen compounds.

The isolation of the undissolved or unsuspended particles from starting compound, precursor mixture or product takes place preferably by filtration, sifting, by means of filters, filter bags, screen, strainer etc. The filters, screen, filter bags etc. can have different mesh sizes.

According to the invention the starting compound can further comprise a phosphate compound or phosphate precursor compound. In addition to phosphoric acid, phosphorous acid, all salts thereof, as well as doped and/or non-doped or mixed transition metal phosphates are suitable as phosphate source.

Furthermore, phosphor trioxide, phosphor tetraoxide, phosphor pentoxide can also be used.

According to the invention, as said, the product can have a carbon coating by admixing a carbon-containing additive or a compound selected from the group consisting of hydrocarbons, cellulose, pitch, carbon, coke, tar, sugar, starch as well as their esters, ethers, acids or derivatives thereof. Typical precursor compounds are for example carbohydrates such as lactose, sucrose, glucose, furthermore polymers such as for example polystyrene butadiene block copolymers, polyethylene, organic monomers, polymers such as styrene, ethylene, terephthalic acid, ethylene glycol, vinyl chloride, propylene, butadiene, polycyclene, polyolefins, polybutadienes, polypropylene, polyvinyl alcohols, phenols, naphthalenes, perylenes, acrylonitriles, vinylacetates, aromatic compounds such as benzene, anthracene, toluene, perylene can be used as well as all further suitable compounds known to a person skilled in the art.

According to the method according to the invention a drying step is carried out at 80 to 150°C, preferably at 70° to 100°C, in order that the lithium transition metal oxygen compound is free from residual moisture, solvent etc. Preferably a calcining step is carried out at a temperature between 500° to 1000°C. According to the invention the temperature in the calcining step should not be chosen too high as unwanted lithium-containing by-products can form which must be removed again in the further isolation steps as they have a disruptive effect on the use as electrode material. The formation of disruptive by-products can be prevented by applying temperatures < 1000°C, for example temperatures of 950°C are therefore chosen.

According to the invention the product can be dispersed or ground during the conversion in step b). This has the advantage in particular that by inserting further grinding and dispersing steps fine-particulate product is obtained which is free from magnetic and/or solid contaminants. By grinding and repeated dispersion of the suspended starting compounds, precursor mixture and product, a good thorough mixing of the starting compounds, as well as a reduction of the particles of the starting compound, precursor mixture and obtained product takes place. A product is obtained which has a uniform particle-size distribution which cannot be achieved by stirring and grinding alone. Additionally, agglomerate formation is prevented, whereby lithium transition metal oxygen compounds which have very small particle sizes can be obtained. The tendency to form agglomerates varies depending on the starting compound used, the precursor mixture resulting therefrom and the obtained lithium transition metal oxygen compound: thus for example for titanium-containing lithium transition metal oxygen compounds a repeated carrying out of the interim grinding and dispersing step is advantageous as very hard material is used with TiO₂ which, in order to obtain a fine-particulate product, must be presented in fine-particulate form. By carrying out the further grinding and/or dispersing step according to the invention using the suspension, the abrasion of items and equipment by hard material, such as for example TiO₂, is reduced, whereby no additional contaminants enter the product.

To carry out the dispersion and grinding treatment any device can be used which a person skilled in the art deems suitable. The device must guarantee an intensive mixing accompanied by simultaneous deagglomeration and reduction of the particles. Preferred devices are for example dispersers, Ultraturrax, mills such as colloid mills, Manton-Gaulin mills, intensive mixers or ultrasonic equipment. The required settings are chosen corresponding to the manufacturer's information and can be determined by routine tests.

The conversion of the starting compounds to the product can take place according to the invention under hydrothermal conditions. Starting from the starting compounds, a lithium and transition metal source, lithium transition metal oxygen compounds can be obtained by means of hydrothermal synthesis. This can take place in particular starting from the individual suspended and/or dissolved components which are used in stoichiometric ratio. It is advantageous that, by varying the pressure and temperature, not only can the structure be determined but also the size of the resulting particles. As small particle sizes are required for use as electrode material, this can be ensured by corresponding choice of the synthesis parameters.

Also by adding crystal nuclei in addition to the templates to the starting compounds, a lithium source, a transition metal source and optionally a phosphate and/or carbon source, small-particle lithium transition metal oxygen compounds are obtained in the starting mixture. According to isolation steps A, B, and/or C magnetic and/or solid contaminants are removed from each source before coalescence. Also, after mixing the starting compounds, accompanied by the formation of a precursor mixture, further grinding and/or dispersing steps, in addition to isolation steps, can be carried out. In step b) crystallites of the lithium transition metal oxygen compound, the crystal growth of which is impeded by dispersion and/or grinding of the solution and/or suspension, result by reaction under hydrothermal conditions. The formation of large crystallites or crystal agglomerates can thereby be prevented and a homogeneous precursor mixture is obtained which is converted to the small-particle lithium transition metal oxygen compounds according to the invention which are free from contaminants.

By hydrothermal conditions is meant according to the invention any conversion of starting compounds, gel mixtures, precursor mixtures etc. which is carried out at increased temperature and pressure in a sealed reaction vessel. The conversion takes place preferably at temperatures between 100°C and 250°C, preferably between 100°C and 180°C. A pressure of 1 bar to 20 bar is applied. Preferably a hydrothermal synthesis runs over 1h to 30h, preferably 3h to 11h. A hydrothermal method is described e.g. in JP 2002 151082 or DE 10 353 266.8 A1.

According to the invention the conversion takes place at a temperature of from 100 to 250°C and a pressure of from 1 to 50 bar.

According to the invention the particles of the suspension have a D90 value of less than 50 µm. The formation of agglomerated large contaminated particles is prevented and the crystallites are reduced by the dispersion and grinding treatment as well as the combination of isolation steps A, B, C and/or D. Due to the homogenization of the suspension it contains particles which preferably have a D90 value of the particles of less than 50 µm, preferably of less than 25 µm, preferably of less than 15 µm. Unlike the methods known in the state of the art, homogeneous particle-size distributions can be obtained by the dispersion and grinding treatment.

According to the invention the transition metal of the transition metal source for producing the lithium transition metal oxygen compounds is selected from the group Ti, Cr, Mn, Fe, Co, Ni, Cu, Mg, Nb, Zn and mixtures thereof.

According to the invention all transition metal compounds can be used as transition metal source, for example inorganic and organic transition metal compounds.

According to the invention all lithium compounds can be used as lithium source, for example lithium fluoride, lithium chloride, lithium bromide, lithium iodide, lithium carbonate, lithium hydroxide, lithium oxide or lithium phosphate as well as mixtures thereof are particularly suitable for this.

According to the invention optionally all phosphorus compounds can be used as phosphorus source, for example orthophosphoric acid, metaphosphoric acid, pyrophosphoric acid, triphosphoric acid, tetraphosphoric acid, hydrogen phosphates or dihydrogen phosphates such as ammonium phosphate or ammonium dihydrogen phosphate, lithium phosphate, transition metal phosphates as well as mixtures thereof are suitable.

A further aspect of the present invention relates to lithium transition metal phosphates or lithium titanates, free from magnetic contaminants, which are obtainable according to the method according to the invention. These lithium transition metal phosphates and lithium titanates are suitable for direct use as electrode material in lithium batteries due to the high purity.

According to the invention by a "lithium transition metal oxygen compound free from magnetic contaminants" is meant a lithium transition metal oxygen compound, i.e. a lithium transition metal phosphate or lithium titanate which contains less than 1 ppm, preferably less than 0.5 ppm and particularly preferably less than 0.25 ppm of magnetic contaminants relative to the total weight of the lithium transition metal oxygen compound.

The lithium transition metal oxygen compound according to the invention is selected from the group of doped and/or non-doped lithium titanates, lithium transition metal phosphates. The lithium transition metal oxygen compounds according to the invention are selected from Li₄Ti₅O₁₂ and LiFePO₄, LiFe₍ₓ₎Mn_{(y)}PO₄, as well as their doped compounds.

Also disclosed herein are further doped lithium transition metal oxygen compounds which can be obtained by means of the method according to the invention, wherein the lithium transition metal oxygen compound has an empirical formula selected from LiₓMO₂, LiₓM₂O₄, LiₓM₅O₁₂, Li₁₊ₓM₂₋ₓO₄, LiₓM_{y}O₄, LiₓM₂O₄, LiₓM₂O₃, LiₓM₃O₄, Li₁₊ₓM₂O₄, Li₂MO₃, Li₁₋ₓM'_{y}M"_{2-y}O₄, LiₓM₂O₃, LiₓM₃O₄, LiMO₂, LiM'_{0.5}M"_{0.5}O₂, Li₁₋ₓM'₁₋₅M"_{0.5}O₄, Li₁₋ₓM'_{y}M"_{1-y}O₂, or Li₁₊ₓM'₂₋ₓM"ₓ(PO₄)₃, LiM'_{0.79}M"_{0.20}M'''_{0.01}O₂, LiM'_{0.33}M"_{0.57}M"'_{0.1}PO₄, LiM'_{0.5}M"_{0.5}PO₄, LiM'PO₄, Li₄M'₅O₁₂, LiM'₂O₄, Li₃ₓM'₂₋ₓM"O₅, LiM'₂M"O₅, LiM'O₃.

According to the empirical formulae named above, the doped lithium transition metal oxygen compounds can contain at least one metal M', selected from the group B, Al, Na, Mg, Ca, Sr, P, Si, Ti, V, Cr, Mn, Fe, Co, Ni, Cu, Zn, Sn, Ga, In, Y, Zr, Nb, Mo, Ru, or W.

Furthermore, the above-named lithium transition metal oxygen compounds can contain at least one metal M", selected from the group B, Al, Na, Mg, Ca, Sr, P, Si, Ti, V, Cr, Mn, Fe, Co, Ni, Cu, Zn, Sn, Ga, In, Y, Zr, Nb, Mo, Ru, or W.

Furthermore, the above-named lithium transition metal oxygen compounds can contain at least one metal M''', selected from the group B, Al, Na, Mg, Ca, Sr, P, Si, Ti, V, Cr, Mn, Fe, Co, Ni, Cu, Zn, Sn, Ga, In, Y, Zr, Nb, Mo, Ru, or W.

Examples of such doped lithium transition metal oxygen compounds with the doping metal cation of Ti, V, Cr, Mn, Fe, Co, Ni, Cu, Zn, Sn, Al, Zr, Mg, Ca are lithium titanium oxygen compounds such as LiₓTi_{y}O (0 < x), (y < 1) ; LiₓTiO₂ with(0 < x ≤ 1), LiₓTi₂O₄ with (0 < x ≤ 2), LiₓTi₅O₁₂ with (0 < x ≤ 4), Li₁₊ₓTi₂₋ₓO₄ with (0 ≤ x ≤ 1/3), LiₓTi_{y}O₄, with (0.8 ≤ x ≤ 1.4) and (1.6 ≤ y ≤ 2.2);
lithium aluminium titanate Li₃ₓAl₂₋ₓTiO₅ with (0 < x ≤ 2);
lithium vanadium oxygen compounds such as LiₓV₂O₄ with (0 < x ≤ 2.5), LiₓV₂O₃ (0 < x ≤ 3.5);
lithium chromium oxygen compounds such as LiₓCr₂O₃ with (0 < x ≤ 3), LiₓCr₃O₄ with (0 < x ≤ 3.8);
lithium manganese oxygen compounds such as LiₓMnO₂ with (0 < x ≤ 2), LiₓMn₂O₄ with (0 < x ≤ 2), Li₁₊ₓMn₂O₄ with (0.5 < x ≤ 1), Li₂MnO₃ ;
lithium iron oxygen compounds such as LiFeO₂, LiₓFe₂O₃ with (0 < x ≤ 2), LiₓFe₃O₄ with (0 < x ≤ 2) ;
lithium metal phosphorus oxygen compounds such as LiFePO₄, LiMnPO₄, LiCoPO₄, LiNbPO₄,
LiFeₓMn_{1-x-y}M_{y}PO₄ with (x < 1, y < 0.3 and x + y < 1);
LiₓN_{y}M_{1-y}ZO₄ with (0 < x ≤ 1 and 0 ≤ y < 1),
LiNb_{y}FeₓPO₄, LiMg_{y}FeₓPO₄, LiMg_{y}FeₓMn_{1-x-y}PO₄, LiZn_{y}FeₓMn_{1-x-y}PO₄, LiFeₓMn₁₋ₓPO₄, LiMg_{y}FeₓMn_{1-x-y}PO₄ with (x and y < 1 and x + y < 1), LiB_{y}FeₓPO₄ LiMn_{y}FeₓPO₄, LiCo_{y}FeₓPO₄, LiMn_{z}Co_{y}FeₓPO₄ with (0 ≤ x, y, z ≤ 1).

Lithium aluminium titanium phosphates such as
Li_{1.3}Al_{0.3}Ti_{1.7}(PO₄)₃, and Li₁₊ₓTi₂₋ₓAlₓ(PO₄)₃ with (0 < x ≤ 1);
lithium cobalt oxygen compounds such as LiCoO₂;
lithium nickel oxygen compounds such as LiNiO₂;
or lithium metal oxygen compounds containing mixtures of manganese and nickel: LiMn_{0.5}Ni_{0.5}O₂, Li₁₋ₓNi_{0.5}Mn_{1.5}O₄ (0 < x ≤ 0.5);
chromium and manganese: Li₁₋ₓCr_{y}Mn_{2-y}O₄ (0 < x ≤ 1) and (0 < y ≤ 2) ;
titanium and zirconium: LiTi₂₋ₓZrₓ(PO₄)₃ with (0 < x ≤ 1) ;
cobalt and nickel: Li₁₋ₓCo_{y}Ni_{1-y}O₂ with (0 < x ≤ 0.6) and (0.2 < y ≤ 1);
nickel and cobalt, doped with calcium and/or magnesium: LiNi_{0.79}CO_{0.20}(Ca)_{0.01}O₂; LiNi_{0.79}Co_{0.20}(Mg)_{0.01}O₂.

In an embodiment of the invention it is preferred that the lithium transition metal oxygen compound is a lithium transition metal phosphate with the Formula (1)

LiM'_{y}M"ₓPO₄ Formula (1),

wherein M" is at least one transition metal selected from the group Fe, M' is different from M" and represents at least one metal cation selected from the group consisting of Co, Ni, Mn, Fe, Nb, Ti, Ru, Zr, B, Mg, Zn, Ca, Cu, Cr or combinations thereof, x is a number ≤ 1 and ≥ 0 and y is a number from ≥ 0 to ≤ 1.

Typical preferred compounds are e.g. LiNb_{y}FeₓPO₄, LiMg_{y}FeₓPO₄ LiB_{y}FeₓPO₄ LiMn_{y}FeₓPO₄, LiCo_{y}FeₓPO₄, LiMn_{z}Co_{y}FeₓPO₄ with 0 ≤ x, y, z ≤ 1.

Also disclosed are LiFePO₄, LiCoPO₄, LiMnPO₄ or LiNiPO₄. LiFePO₄ is quite particularly preferred.

In a further embodiment of the invention the lithium transition metal phosphate is a lithium manganese metal phosphate of the Formula (2)

LiFeₓMn_{1-x-y}MyPO₄ Formula (2),

in which M is a bivalent metal from the group Sn, Pb, Zn, Mg, Ca, Sr, Ba, Co, Ti and Cd and wherein: x < 1, y < 0.3 and x + y < 1.

Zn, Mg, Ca or their combinations, in particular Zn and Mg are particularly preferred as bivalent metal M in the compound of the Formula (2). It has surprisingly been shown within the framework of the present invention that these electrically inactive substitution elements make possible the provision of materials with particularly high energy density when they are used as electrode materials. It was found that with the substituted lithium metal phosphate of the Formula (2) LiFeₓMn_{1-x-y}M_{y}PO₄ the value for y is preferably 0.1.

Lithium transition metal oxygen compounds can additionally also contain further non-metals, for example N, P, S, Se, Te.
Examples of such lithium transition metal oxygen compounds are lithium iron phosphor oxygen compounds, LiFePO₄;
lithium iron sulphur oxygen compounds, Li₁₊ₓFe_{1+y}(SO₄)₃ with (0 < x ≤ 5) and (0 < y ≤ 5);
The lithium transition metal oxygen compound has an average particle size of from 100 to 750 nm. The lithium transition metal oxygen compounds are preferably suitable for use as electrode material in lithium batteries due to the small particle size.

The doped or non-doped lithium transition metal oxygen compounds are used directly as electrode material for rechargeable lithium-ion batteries. Life, current density and resistance can be increased by using the lithium transition metal oxygen compounds, due to the high purity and the small particle size.

The lithium transition metal oxygen compound is used in an embodiment of the invention as material for an electrode, an anode and/or a solid electrolyte in a lithium battery.

The lithium transition metal oxygen compound can also be a doped or non-doped lithium transition metal oxygen compound or a carbon-containing doped or non-doped lithium transition metal oxygen compound, as well as a doped, non-doped, carbon-containing or non-carbon-containing phosphor-containing lithium transition metal oxygen compound which is suitable for use as solid electrolyte or electrode for a lithium battery.

Also described herein is an electrode containing as active material a lithium transition metal oxygen compound which is free from magnetic or solid contaminants and is present in fine-particulate form. The electrons and/or ion migration speed and thereby the current flow are increased by the purity and the small particle size.

Also described herein is
a secondary lithium-ion battery containing a lithium transition metal oxygen compound as electrode. The secondary lithium-ion battery shows particularly high cycle stability because of the high purity of the lithium transition metal oxygen compound used which is free from contaminants and is present as fine particles in monomodal particle-size distribution.

The present invention is described in more detail below using a figure and examples without these being taken as limiting:

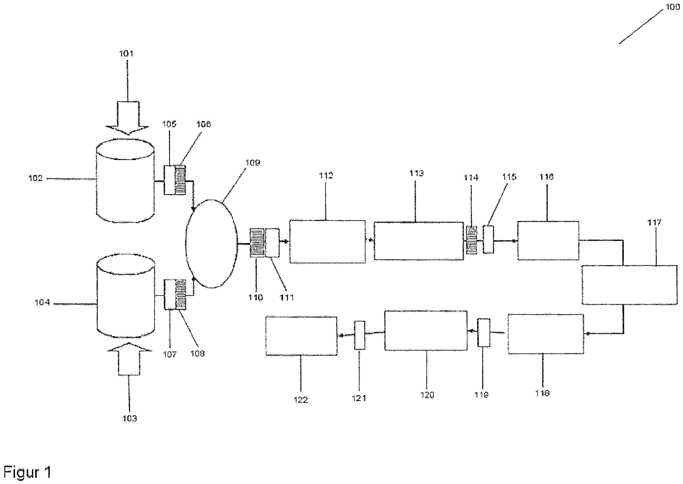

Fig. 1 shows the diagram 100 of the method according to the invention

The diagram of a method according to the invention is shown in Figure 1.

A starting material A 101 and a second starting material B 103 are respectively dissolved in a container 102 or suspended in container 104.

In the case of titanium dioxide as starting material 101 lithium hydroxide is produced as crude solution A 102.

Starting material B 103 is titanium dioxide from which in container 104 a crude suspension results.

Then both the crude suspension from container 104 and the crude solution from container 102 are subjected to an isolation step 105/106 or 107/108, wherein isolation step 105/106, called isolation steps A+B in the description, contains combined equipment with a micrometer bag filter and 10,000 Gauss Fe-Nd-B magnetic rod for purifying crude solutions. Isolation step 107/108 is isolation step C and here too involves a piece of combined equipment with a 250-pm wire cloth screen and a 10,000 Gauss Fe-Nd-B magnetic rod for purifying the crude suspension.

The reaction is then carried out hydrothermally in container 109 and after the reaction has finished an isolation step 110 (isolation step C) is carried out by means of a 250-pm wire cloth screen to isolate large particles from the reaction suspension and then (isolation step D) in isolation step 111 the suspension is passed over a suspension magnetic separator with several Fe-Nd-B magnetic rods to isolate magnetic particles from the reaction product suspension.

Filtration 112 then takes place and in 113 the resuspending/optional mixing with carbon-containing compounds or additives takes place before an isolation step 114 (isolation step C) by means of a 250-pm wire cloth screen to isolate large particles from the resuspended interim product takes place again which in isolation step 115 (isolation step D) is guided over a suspension magnetic separator with several Fe-Nd-B magnetic rods for isolating magnetic particles from the resuspended interim product.

Then the drying 116 and a granulation 117 took place connected to a thermal treatment 118, for example a calcining of the product at between 500 and 750°C.

After thermal treatment 118 a further isolation step 119 (isolation step E) takes place by means of an axial Fe-Nd-B magnetic rod in a vertical granular precipitation flow.

After grinding and air sifting 120 a further isolation step 121 (isolation step F) takes place in a fluid-bed counterjet mill with sifter for grinding the end-product while simultaneously isolating foreign particles 119 which are difficult to grind.

The last isolation step 121 (isolation step G) removes, by means of an axial Fe-Nd-B magnetic rod in the pneumatic delivery flow of the pulverulent end-product, the last contaminants and the powder is packed again in step 122.

### Method part:

The methods and equipment used are explained in more detail below.

### Grinding and sifting:

The steps of grinding and sifting a lithium metal oxygen compound were carried out in an AFG 200 fluid-bed counterjet mill from Hosokawa Alpine AG, Augsburg, Germany. The equipment was used in accordance with the manufacturer's instructions.

### Determination of the particle-size distribution:

The particle-size distribution was determined according to DIN 66133 by means of laser granulometry with a Malvern Hydro 20005 device.

### Isolation of the contaminants:

The filtration according to isolation step A, B, or C was carried out in the laboratory tests with a Schott vacuum nutsche made of Duran glass (Buchner funnel) with 110-mm standard diameter, which is mounted via a rubber sleeve on a suction flask from the same manufacturer and is filtered by suction via a membrane vacuum pump. For a filtration according to isolation step A, a nitrocellulose membrane filter with 1-µm pore size is placed onto the filter plate. For a filtration according to isolation step B or C, the filter plate is removed and replaced by a stainless steel mesh with a 250-pm mesh size. For combination with a permanent magnet, in both cases the teflonized Fe-Nd-B bar magnet named below is placed onto the outlet of the Buchner funnel below the filter apparatus.

### Determination of purity:

To determine the magnetic contaminants, 150 g lithium transition metal oxygen compound is added to a clean 1-1 plastic flask and 400 g isopropanol added to it. To this is added a completely clean, teflon-coated Fe-Nd-B bar magnet approx. 1.5 cm in diameter and approx. 5 cm long and with a magnetic field strength of over 5000 gauss. The flask is sealed and rolled for 30 min at 100 rpm on a roller table. After this period, the magnet is removed from the flask without coming into contact with contaminating materials, rinsed briefly with isopropanol and transferred to a sealable, new and clean 50-ml PP or PE test tube. The bar magnet is rinsed further with isopropanol in the test tube which is finally filled with isopropanol and sealed. The sealed test tube, with magnet, is then treated for 20 min in an ultrasound bath with a sound frequency of at least 50 kHz and a specific sound power between 20 W and 40 W per litre bath contents, which cleans the surface of the magnet thoroughly but gently, without damaging the teflon coating. After fresh rinsing of the magnet with isopropanol inside the test tube, the tube is treated once more for 20 min in the ultrasound bath and a final rinsing is carried out once more and the isopropanol drained off. The aim of this treatment is to remove all paramagnetic lithium iron phosphate particles adhering through surface forces to the magnet itself and to the magnetic particles, without removing the ferromagnetic contaminant particles adhering tightly to the magnet and without exposing the magnet to contamination by magnetic particles from the environment. The magnet is then heated to between 80° and 90°C in the test tube for 2 h under reflux with a mixture of 4.5-ml of a 35% hydrochloric acid and 1.5-ml of a 65% nitric acid. After cooling, the magnet is removed from the extraction solution, rinsed with demineralized water into the inside of the tube which is finally filled with demineralized water up to the 50-ml mark. The iron content of the extraction solutions is then determined with OES-ICP using suitable dilutions and expressed in ppm back-calculated relative to the 150-g starting sample.

A further test method used utilizes a JEOL scanning electron microscope with field emission electrode and installed EDX apparatus for energy-dispersive detection of the characteristic X-radiation, excited by the electron beam, of the elements contained in the surface of the sample. For this, likewise a suspension of 150 g lithium transition metal oxygen compound with 400 g isopropanol is prepared in a clean plastic flask, but a clean nickelized and tinned IBS Fe-Nd-B magnetic sphere 1 cm in diameter magnetized as a dipole is added instead of the bar magnet mentioned above. The flask is similarly sealed and rolled for 30 min at 100 rpm on a roller table. After this period, the magnetic sphere is removed from the flask without coming into contact with contaminating materials and likewise, as described above, treated with ultrasound and rinsed, so that only the ferromagnetic contaminant particles adhering tightly through magnetic forces remain on the magnetic sphere. The magnetic particles are concentrated on relatively small areas around the two magnetic poles of the sphere, where the magnetic field lines are particularly close together. The sphere is dried without being exposed to contamination by magnetic particles from the environment. By pressing the pole regions onto the electrically conductive adhesive film of a customary SEM sample holder, the magnetic particles on the two magnetic poles can then be transferred to same and examined under the SEM. In the image of the back-scattered electrons (BSE), the particles can already be roughly differentiated into oxidic and metallic by means of the material contrast. A more precise chemical analysis can be carried out with the EDX detector with which spot-accurate multielement analyses of individual particles over roughly 10 µm in diameter or large-area scans for individual elements can be carried out. By estimating size or volume and number of particles, only a rough quantitative determination of the magnetic contaminants with respect to the starting powder is possible, but the method, unlike those named above, allows a characterization of individual particles, which is helpful for identifying their origin.

### Embodiment example 1: Preparation of carbon-containing lithium iron phosphate:

*Reaction equation:* FeSO₄ · 7 H₂O + H₃PO₄ + 3 LiOH·H₂O → LiFePO₄ + Li₂SO₄ + 11 H₂O

Starting from FeSO₄·7 H₂O, according to the above reaction equation LiFe(II)PO₄ is precipitated out of an aqueous Fe(II) precursor mixture using the method according to the invention. The conversion and drying/sintering and calcining is carried out under protective gas in order to avoid an oxidation of Fe^{II} to Fe^{III} with formation of by-products.

417.04 g FeSO₄·7 H₂O was dissolved in approx. 1 1 distilled water and 172.74 g 85% phosphoric acid was added slowly accompanied by stirring. Solid and/or magnetic particles were removed from the iron-containing solution using the method according to the invention in accordance with isolation step A+B. For this, the acidic iron-containing solution was added to the vacuum filter device described above and filtered through by suction. The vacuum nutsche is equipped with a membrane filter with a 1-µm mesh size and with the teflonized bar magnet, as a result of which solid, undissolved and possibly magnetic particles of up to 1 µm were isolated. At the same time, magnetic particles were isolated from the solution by means of the teflon-encased Fe-Nd-B permanent magnetic rod arranged centrally in the outlet. The acidic solution from which magnetic and solid contaminants have been removed was placed in an autoclave at 400 RPM stirrer speed, the autoclave was loaded with 6-7 bar nitrogen via the dipping tube and relieved again via the vent valve. The process was repeated twice.

188.82 g lithium hydroxide LiOH·H₂O was dissolved in 1 1 distilled water. In order to isolate undissolved contaminants and particles, the solid and magnetic particles were removed from the lithium-containing educt solution in the vacuum filter with membrane filter and permanent magnet according to the isolation step A+B described above.

In order that a dispersion and grinding treatment can be carried out during the reaction in the autoclave, a disperser (IKA, ULTRATURRAX® UTL 25 Basic Inline with dispersion chamber DK 25.11) was integrated into the autoclave and connected between vent valve and bottom outlet valve. The pump direction of the disperser starts at the bottom outlet valve, via the disperser to the vent valve, and is operated at the middle power level (13500 RPM).

With the addition of the lithium source, a greenish-white precipitate settled out which was already dispersed during the reaction with the help of the disperser, with the result that the precipitate that forms was obtained as fine-particle material. The disperser was set in operation before the addition of the lithium source and operated continuously at the middle power level for roughly 1 h during the reaction to treat the viscous suspension. The obtained average particle size was then approx. 5 µm. As a result of the treatment with the disperser, the suspension was mixed intensively and an agglomeration of the precursor mixture prevented.

After hydrothermal conversion at 160°C for 10 h, the mixture was cooled slowly to 30°C and the coarse-particle load of the lithium iron phosphate suspension filtered off on the vacuum filter apparatus mentioned at the outset according to isolation step C. For this, the screen insert with a mesh size of 250 µm was used and the teflon-coated bar magnet was placed onto the outlet opening. In addition, the above-named teflon-coated bar magnet was inserted into the piece of tube with the result that the suspension was still able to flow through a gap a few mm wide between the magnet and the tube wall in order to also be able to remove magnetic contaminant particles. The lithium iron phosphate product was then pumped into a pressure filter (Seitz filter) under nitrogen atmosphere and filtered on a double paper filter. The setting of the ProMinent diaphragm pump used was such that a pressure of 5 bar was applied and not exceeded. The filter cake was then washed with distilled water and the conductivity of the wash water tested until the latter was less than 200 µS/cm.

After the filtration, the obtained moist filter cake was resuspended in the mortar with 9.5 g lactose monohydrate and 10 g water per 100 g filter cake dry mass. For isolation step C+D, the suspension was filtered afresh in the vacuum filter apparatus with 250-pm screen insert and bar magnet. Further coarse particles and also magnetic particles were isolated from the resuspended lithium iron phosphate according to isolation step C.

The lithium iron phosphate / lactose suspension was then dried overnight at 70°C under vacuum in a flat porcelain dish without oxidizing in air. The coarsely crushed dry cake was then heated to 750°C under nitrogen in a Linn tight-closing protective gas chamber furnace with a heating time and a residence time of 6 h each. The added lactose was pyrolyzed to a carbon coating of the particles. A total of 10 kg of the coarsely crushed furnace product of several batches were combined and then deagglomerated in a Hosokawa-Alpine AFG 100 fluid-bed counterjet mill (air-jet mill) fitted with a sifter. This method step was combined with three isolation steps E, F and G. The grinding stock placed in a feed funnel was fed uniformly to the grinding chamber via a twin-screw feeder and a vertical downcomer. To remove magnetic contaminants from this vertical granular precipitation flow of a granulated, solid and fine-particulate lithium iron phosphate, two cuboid nickelized IBS Fe-Nd-B magnets lying one on top of the other 50 mm high, 20 mm wide, and 8 mm thick are installed centrally in the downcomer, to which specifically those magnetic particles that are located freely between the grinding stock adhere. This relates in particular to particles that enter the material during the furnace process or that come from abrasion of the dosing screw.

Directly following this isolation step E, the grinding stock was further purified according to isolation step F in the course of the continuous grinding and sifting process with the AFG 100 fluid-bed counterjet mill from Hosokawa Alpine AG. For this, the grinding and sifting process was interrupted once the 10-kg grinding stock had been completely ground and sifted and only approx. 100 g of the grinding stock was still in the grinding chamber. This residue in the fluid-bed counterjet mill of roughly 1% of the quantity used, which contains the magnetic and solid contaminants in concentrated form, was removed and discarded by detaching the grinding chamber, before a further 10 kg grinding stock was added and deagglomerated. In parallel to the grinding and sifting process of the lithium iron phosphate, a last purification step (isolation step G) took place, in order to isolate any last magnetic particles still contained, for example from metallic abrasion of equipment and devices. This isolation step took place in the pneumatic transport stream of the deagglomerated and sifted lithium iron phosphate particles exiting through the sifter outlet pipe. For this, two further cuboid Fe-Nd-B magnets of the type described above are installed centrally in the outlet pipe. Unlike step E, this isolation step can also detect magnetic contaminants that had initially been located inside the granule particles, but had been released in the grinding process.

For this, step E prevents large magnetic particles which can still be easily detected from entering the grinding chamber and being reduced there into many smaller magnetic particles which are thus more difficult to remove.

The isolation steps according to the invention led to an efficient isolation of the magnetic and/or solid contaminants from lithium transition metal oxygen compounds such that a small-particle purified material is obtained which can be used directly as electrode material.

The level of magnetic contaminant particles measured with the method mentioned above is less than 1 ppm, preferably less than 0.5 ppm and in further embodiments of the invention less than 0.25 ppm with a particle-size distribution of from 0.9 µm to 7.5 µm. A further post-treatment thus becomes unnecessary thanks to the purification method according to the invention, whereby costs and time can be saved.

### Embodiment example 2:

### Preparation of carbon-containing lithium iron phosphate via a one-stage wet-chemical route without hydrothermal treatment:

417.04 g iron(II) sulphate heptahydrate FeSO₄·7 H₂O and 206.27 g lithium dihydrogen phosphate LiH₂PO₄ were dissolved in 1 1 deionized and deaerated water. Solid and/or magnetic particles were then removed from the iron-containing solution using the method according to the invention as described in Example 1 in accordance with isolation step A. 134.11 g lithium hydroxide monohydrate LiOH·H₂O was dissolved in 800 ml deionized and deaerated water and solid and/or magnetic particles were removed, also as described in Example 1, in accordance with isolation step A. This solution was then added dropwise to the above-named solution over a period of 15 min under strict exclusion of oxygen, wherein a white precipitate formed which tends somewhat to sedimentation. For this, this process was carried out in a glovebox loaded with nitrogen.

Solid and magnetic contaminants were removed from the thus-obtained fine-particulate suspension using isolation step B according to the invention analogously to Example 1 through filtration via the 250-pm screen with separating magnets. This step was also carried out in the protective gas box in order to avoid the entry of air and oxidation of Fe(II) to Fe(III). The purified suspension was then likewise filtered off by suction under protective gas on a paper filter and washed sulphate-free with a total of 2 1 deionized water. The white to white-bluish filter cake was composed of lithium orthophosphate Li₃PO₄ and iron(II) orthophosphate dodecahydrate Fe₃(PO₄)₂ · 12 H₂O. The filter cake was suspended in 300 g of a 10% lactose solution without prior drying. Solid and magnetic contaminants were removed afresh from this suspension in accordance with the isolation step C+D according to the invention in the above-named device via the 250-pm mesh screen and the separating magnet. It was then dried at 100°C under nitrogen in a flat dish. The coarsely crushed dry cake was then heated to 750°C under nitrogen in a Linn tight-closing protective gas chamber furnace with a heating time and a residence time of 6 h each. The precipitation product was converted to lithium iron phosphate and the added lactose pyrolyzed to a carbon coating of the particles. The product contained approximately 2% carbon. A total of 10 kg of the furnace product of several batches were combined and then deagglomerated in a Hosokawa-Alpine AFG 100 fluid-bed counterjet mill (air-jet mill) fitted with a sifter. This method step was again combined with the three isolation steps E, F and G analogously to Example 1.

### Embodiment example 3:

### Preparation of carbon-containing lithium iron phosphate via a two-stage wet-chemical route without hydrothermal treatment:

417.04 g iron(II) sulphate heptahydrate FeSO₄ · 7 H₂O and 172.95 g of an 85% phosphoric acid were dissolved in 1 1 deionized and deaerated water. Solid and/or magnetic particles were then removed from the iron-containing solution using the method according to the invention as described in Example 1 in accordance with isolation step A. 306.56 g of a 25% ammonia solution in water was added dropwise to the above-named solution over a period of 15 min under strict exclusion of oxygen, wherein a white precipitate formed which tends somewhat to sedimentation. For this, this process was carried out in a glovebox loaded with nitrogen. Solid and magnetic contaminants were removed from the obtained fine-particulate suspension using isolation step B according to the invention analogously to Example 1 through filtration via the 250-pm screen with magnets. This step was also carried out in the protective gas box in order to avoid the entry of air and oxidation of Fe(II) to Fe(III). The purified suspension was then likewise filtered off by suction under protective gas on a paper filter and washed sulphate-free with a total of 2 1 deionized water. The white filter cake was composed of ammonium iron(II) orthophosphate monohydrate (NH₃)Fe(II)PO_{4 ·} H₂O. The filter cake was suspended without prior drying in a solution of 23.10 g lithium citrate and 77.21 g lithium acetate in 300 g water, which had been neutralized by the addition of a small quantity of citric acid. Solid and magnetic contaminants were removed afresh from this suspension using the isolation step C+D according to the invention in the above-named device via the 250-pm mesh screen and the separating magnet. It was then dried at 100°C under nitrogen in a flat dish. The coarsely crushed dry cake was then heated to 750°C under nitrogen in a Linn tight-closing protective gas chamber furnace with a heating time and a residence time of 6 h each. The reaction mixture was converted to lithium iron phosphate and the added organic salts pyrolyzed to a carbon coating of the particles. The carbon content was roughly 2%. A total of 10 kg of the furnace product of several batches were combined and then deagglomerated in a Hosokawa-Alpine AFG 100 fluid-bed counterjet mill (air-jet mill) fitted with a sifter. This method step was again combined with the three isolation steps E, F and G analogously to Example 1.

### Embodiment example 4:

### Preparation of carbon-containing lithium iron manganese mixed phosphate Li (Fe_{0.5}Mn_{0.5})PO₄ via a one-stage wet-chemical route with hydrothermal treatment:

The process was as in Example 1, but for the acidic iron-containing solution only 208.52 g iron(II) sulphate heptahydrate FeSO₄ · 7 H₂O and in addition 126.74 g manganese(II) sulphate monohydrate MnSO₄ · 1 H₂O were dissolved in 1 1 water in order to obtain a molar iron to manganese ratio of 1:1. All other steps were carried out analogously to Example 1.

### Embodiment example 5:

### Preparation of carbon-containing lithium iron manganese mixed phosphate Li (Fe_{0.5} Mn_{0.5})PO₄ via a one-stage wet-chemical route without hydrothermal treatment:

The process was as in Example 2, but for the acidic iron-containing solution only 208.52 g iron(II) sulphate heptahydrate FeSO₄ · 7 H₂O and in addition 126.74 g manganese(II) sulphate monohydrate MnSO₄ · 1 H₂O were dissolved in 1 1 water in order to obtain a molar iron to manganese ratio of 1:1. All other steps were carried out analogously to Example 2.

### Embodiment example 6:

### Preparation of carbon-containing lithium iron manganese mixed phosphate Li (Fe_{0.5} Mn_{0.5})PO₄ via a two-stage wet-chemical route without hydrothermal treatment:

The process was as in Example 3, but for the acidic iron-containing solution only 208.52 g iron(II) sulphate heptahydrate FeSO₄ · 7 H₂O and in addition 126.74 g manganese(II) sulphate monohydrate MnSO₄ · 1 H₂O were dissolved in 1 1 water in order to obtain a molar iron to manganese ratio of 1:1. All other steps were carried out analogously to Example 3.

### Embodiment example 7: Preparation of lithium titanate:

*Reaction equation:* 4 LiOH·H₂O + 5 TiO₂ → Li₄Ti₅O₁₂ + H₂O

Starting from LiOH and TiO₂, according to the above reaction equation lithium titanate was obtained in spinel form, which represents the preferred form for intercalation electrodes in lithium batteries.

1,000 kg distilled water was pumped into an LiOH receiver container and heated to 40°C. 147.4 kg LiOH.H₂O was then dissolved in the receiver container, wherein the stirrer ran at 100% power for half an hour. After dissolving the lithium hydroxide, the solution was transferred to a second receiver container, wherein it was pumped via a tubular bag filter with a 1-pm pore size and centrally arranged Fe-Nd-B bar magnet encased in stainless steel (=combination device) in order to remove undissolved and magnetic contaminants. 317.6 kg TiO₂ was then stirred into this second container and the stirrer left to run at 100% power for half an hour in order to disperse the TiO₂ completely.

The mixture was then pumped into the reaction container and rinsed clean with 126 litres of distilled water. During the pumping into the reaction container, the suspended mixture was passed through an Eriez B2-type suspension magnetic trap as well as a stainless steel strainer with a 250-pm screen mesh size, which were inserted into the pumping pipe in order to isolate coarse-particle and suspended magnetic contaminants. The pumping took place slowly over an hour in order to make possible an effective isolation of the contaminants.

After the first pumping out, a further 250 litres of water were pumped into the receiver container and stirred and a further 761 litres of distilled water were subsequently pumped into the receiver container. The whole mixture was then rinsed with nitrogen, the reactor lid was screwed on and the temperature programme switched from cooling to heating with steam. The reaction was carried out at 160°C and 6.4 bar for 18 hours. The heating was then switched off and the reaction mixture cooled, and the product pressed off in a filter press. When being pumped into the filter press, the reaction suspension was once more passed over the above-named magnetic trap and the strainer in order to isolate coarse-particle and magnetic contaminants that may have formed through abrasion or secondary reactions during the hydrothermal treatment.

A pumping-in time of approx. 20 minutes and a pumping-out time of 22 minutes was required for the pressing.

The product was then placed into a press and 36 216-kg filter cake plates were produced which were resuspended with 400 litres of water and placed in a spray dryer at/with a starting temperature of 365°C. The suspension continuously fed to the spray dryer was passed again over the B2-type magnetic trap and the 250-pm strainer. The powder was then compacted and calcined in a Nabertherm furnace at a temperature of from 700 to 750°C, preferably 700°C, for a period of from 5 to 12 hours.

### Embodiment example 8

### Preparation of carbon-coated lithium titanate

The preparation took place as in Example 7, except that after the spray-drying 105 g lactose monohydrate per kilogram solid was added and the method steps according to the invention then carried out further.

As an alternative to a Nabertherm furnace, the calcining can also take place in a rotary furnace, wherein a rotary furnace with a heated tube length of 150 cm and a tube diameter of 15 cm is pre-heated to 750°C under nitrogen.

The compacted pre-product was added at a rate of 2 kg/h, wherein the fill quantity in the furnace was approx. 5 kg, i.e. the residence time in the heating zone was approx. 1.8 hours.

The product was then collected under nitrogen in a metal drum coated on the inside and ground.

The temperature was 700 to 750°C over a residence time of from 1 to 5 h.

The thus-obtained calcined granular material was then ground in a Hosokawa-Alpine 200 AFG air-jet mill analogously to Examples 1 to 7, wherein for isolation step F a total of approx. 1% of the grinding stock, loaded with contaminants, was discharged periodically through a discharge flap in the floor of the grinding chamber and discarded, and wherein the product was charged under dry air at an addition rate of approx. 25 kg/h. The grinding took place with dried air which was pressed into the grinding chamber through 3.5-mm Al₂O₃ nozzles and a sifting of the ground product then took place (rotation of the sifter wheel approx. 6,000/min). For isolation step E, there was installed in the downcomer, via which the AFG 200 was continuously charged with the cooled furnace product, an RF-type cartridge magnetic separator with a 4-inch nominal diameter and an internal Fe-Nd-B magnet encased in stainless steel, through which the furnace product passed uniformly.

The ground product was then collected in a filter system and the nitrogen put away.
For the final isolation step G, a further cartridge magnetic separator of the same type was installed in the pneumatic piece of tube which leads from the product discharge of the mill sifter to the product separating filter.

### Embodiment example 9: Determination of the purity of lithium iron phosphate according to the invention and lithium iron manganese phosphate with and without carbon coating

The syntheses described above led to products which were then tested for their contaminants content as described above. It was shown that the lithium iron phosphates obtained by means of the method according to the invention, both with and without carbon coating, were mostly free from solid and magnetic contaminants. Only residues in the region of 0.20 ppm were measured.

### Comparison example:

As comparison example, a lithium iron phosphate with and without carbon coating was obtained by a method from the state of the art (solid-state synthesis and hydrothermal synthesis). The results showed that magnetic (metallic and Fe₃O₄) as well as solid oxides of the metals, as well as different lithium-containing by-products were always able to be detected, and the contaminants were in the region of from 1-5 ppm.

## Claims

1. Method for producing a fine-particulate doped or non-doped Li₄Ti₅O₁₂ or LiFePO₄ or LiFeMnPO₄ free from magnetic contaminants comprising the steps of
a) providing starting compounds of the lithium transition metal phosphate or lithium titanate, comprising a lithium source, a transition metal source and a phosphate source or a lithium, titanium and oxygen source, wherein magnetic contaminants as well as undissolved or unsuspended particles are isolated at least from one source,
b) converting the starting compounds to a precursor mixture and/or precursor suspension, which is then optionally converted to a lithium transition metal phosphate or lithium titanate compound in the form of a suspension, wherein magnetic and optionally oxidic contaminants as well as undissolved or unsuspended particles are isolated from (i) the precursor mixture or suspension and/or (ii) from the lithium transition metal phosphate suspension or lithium titanate compound suspension,
c) obtaining the lithium transition metal phosphate compound or lithium titanate compound or the precursor mixture and/or precursor suspension which is then thermally treated and magnetic contaminants are then removed from it,
wherein a grinding and/or air sifting of the obtained product takes place after step c) and wherein after grinding and/or air sifting magnetic contaminants are removed from the product, wherein during the method, the removal of magnetic contaminants takes place by means of magnets and the removal of the undissolved or unsuspended particles takes place by filtration or sifting by means of a filter, a screen or a strainer.

2. Method according to claim 1, wherein in step a) a further starting compound is added which is a carbon-containing compound.

3. Method according to claim 1, wherein after obtaining the purified lithium transition metal phosphate compound or lithium titanate compound in step c) this is mixed with a carbon-containing compound, whereupon a suspension or mixture is obtained.

4. Method according to one of claims 1 to 3, wherein the thermal treatment comprises a drying step.

5. Method according to claim 4, wherein a granulation step is carried out after the drying step.

6. Method according to claim 5, wherein a calcining step is carried out after the granulation step.

7. Method according to claim 6, wherein a grinding and/or air sifting of the obtained product takes place after the calcining step.

8. Method according to claim 2 or 3, wherein the carbon-containing compound is selected from hydrocarbons, monomers, polymers, polycyclene, polyolefins, polybutadienes, polyvinyl alcohols, phenols, styrenes, naphthalines, perylenes, acrylonitriles, vinylacetates, cellulose, pitch, tar, sugars, starch as well as their esters, ethers, acids or derivatives thereof.

9. Method according to one of the previous claims, wherein the drying step is carried out at 80-150°C.

10. Method according to claim 6, wherein the calcining step is carried out at 500-1,000°C.

11. Method according to one of the previous claims, wherein the product is dispersed or ground during the conversion in step b).

12. Method according to claim 1, wherein the conversion takes place at a temperature of from 100 to 160°C and a pressure of 1 bar.

13. Method according to one of the previous claims, wherein the transition metal of the transition metal source is selected from the group Ti, Cr, Mn, Fe, Co, Ni, Cu, Ru, Zn or mixtures thereof.

14. Method according to claim 13, wherein also in step a) a metal source is added, selected from Ca, Mg, Zn, Sn, Sb, As, Bi and mixtures thereof.

## Patentansprüche

1. Verfahren zur Herstellung eines von magnetischen Verunreinigungen freien feinteiligen dotierten oder nicht dotierten Li₄Ti₅O₁₂, LiFePO₄ oder LiFeMnPO₄, umfassend folgende Schritte:
a) Bereitstellen von Ausgangsverbindungen des Lithium-Übergangsmetallphosphats oder Lithiumtitanats, umfassend eine Lithiumquelle, eine Übergangsmetallquelle und eine Phosphatquelle oder eine Lithium-, Titan- und Sauerstoffquelle, wobei magnetische Verunreinigungen sowie nicht gelöste oder nicht suspendierte Partikel zumindest aus einer Quelle abgetrennt werden,
b) Umsetzen der Ausgangsverbindungen zu einer Precursormischung und/oder Precursorsuspension, welche anschließend gegebenenfalls zu einer Lithium-Übergangsmetallphosphat- oder Lithiumtitanatverbindung in Form einer Suspension umgesetzt wird, wobei magnetische und gegebenenfalls oxidische Verunreinigungen sowie nicht gelöste oder nicht suspendierte Partikel aus (i) der Precursormischung oder -suspension und/oder (ii) aus der Suspension des Lithium-Übergangsmetallphosphats oder der Suspension der Lithiumtitanatverbindung abgetrennt werden,
c) Gewinnen der Lithium-Übergangsmetallphosphatverbindung oder Lithiumtitanatverbindung oder der Precursormischung und/oder Precursorsuspension, welche anschließend thermisch behandelt wird und wobei magnetische Verunreinigungen anschließend aus ihr abgetrennt werden,
wobei eine Vermahlung und/oder Windsichtung des gewonnenen Produkts nach Schritt c) erfolgt und wobei magnetische Verunreinigungen nach der Vermahlung und/oder Windsichtung aus dem Produkt abgetrennt werden, wobei während des Verfahrens die Abtrennung von magnetischen Verunreinigungen mittels Magneten erfolgt und die Abtrennung der nicht gelösten oder nicht suspendierten Partikel durch Filtration oder Sichtung mittels eines Filters, eines Siebs oder eines Strainers erfolgt.

2. Verfahren nach Anspruch 1, wobei in Schritt a) eine weitere Ausgangsverbindung, welche eine kohlenstoffhaltige Verbindung ist, zugesetzt wird.

3. Verfahren nach Anspruch 1, wobei nach dem Gewinnen der gereinigten Lithium-Übergangsmetallphosphatverbindung oder Lithiumtitanatverbindung in Schritt c) diese mit einer kohlenstoffhaltigen Verbindung vermischt wird, worauf eine Suspension oder Mischung gewonnen wird.

4. Verfahren nach einem der Ansprüche 1 bis 3, wobei die thermische Behandlung einen Trocknungsschritt umfasst.

5. Verfahren nach Anspruch 4, wobei ein Granulationsschritt nach dem Trocknungsschritt durchgeführt wird.

6. Verfahren nach Anspruch 5, wobei ein Kalzinierschritt nach dem Granulationsschritt durchgeführt wird.

7. Verfahren nach Anspruch 6, wobei eine Vermahlung und/oder Windsichtung des gewonnenen Produkts nach dem Kalzinierschritt erfolgt.

8. Verfahren nach Anspruch 2 oder 3, wobei die kohlenstoffhaltige Verbindung aus Kohlenwasserstoffen, Monomeren, Polymeren, Polycyclen, Polyolefinen, Polybutadienen, Polyvinylalkoholen, Phenolen, Styrolen, Naphthalinen, Perylenen, Acrylonitrilen, Vinylacetaten, Cellulose, Pech, Teer, Zuckern, Stärke sowie deren Estern, Ethern, Säuren oder Derivaten davon ausgewählt ist.

9. Verfahren nach einem der vorangehenden Ansprüche, wobei der Trocknungsschritt bei 80-150 °C durchgeführt wird.

10. Verfahren nach Anspruch 6, wobei der Kalzinierschritt bei 500-1.000 °C durchgeführt wird.

11. Verfahren nach einem der vorangehenden Ansprüche, wobei das Produkt während der Umsetzung in Schritt b) dispergiert oder vermahlen wird.

12. Verfahren nach Anspruch 1, wobei die Umsetzung bei einer Temperatur von 100 bis 160 °C und einem Druck von 1 bar erfolgt.

13. Verfahren nach einem der vorangehenden Ansprüche, wobei das Übergangsmetall der Übergangsmetallquelle aus der Gruppe Ti, Cr, Mn, Fe, Co, Ni, Cu, Ru, Zn oder Mischungen davon ausgewählt ist.

14. Verfahren nach Anspruch 13, wobei auch in Schritt a) eine Metallquelle zugesetzt wird, die aus Ca, Mg, Zn, Sn, Sb, As, Bi und Mischungen davon ausgewählt ist.

## Revendications

1. Procédé pour produire du Li₄Ti₅O₁₂ ou du LiFePO₄ ou du LiFeMnPO₄ à particules fines, dopés ou non dopés, exempts de contaminants magnétiques, comprenant les étapes
a) utilisation de composés de départ du phosphate de lithium et de métal de transition ou du titanate de lithium, comprenant une source de lithium, une source de métal de transition et une source de phosphate ou une source de lithium, de titane et d'oxygène, les contaminants magnétiques ainsi que des particules non dissoutes ou non mises en suspension étant isolées à partir d'au moins une source,
b) conversion des composés de départ en un mélange précurseur et/ou en une suspension de précurseur, qui est ensuite éventuellement converti(e) en un composé de type phosphate de lithium et de métal de transition ou de type titanate de lithium sous forme d'une suspension, les contaminants magnétiques et éventuellement oxydes ainsi que des particules non dissoutes ou non mises en suspension étant isolés à partir (i) du mélange précurseur ou de la suspension de précurseur et/ou (ii) de la suspension de phosphate de lithium et de métal de transition ou de la suspension de composé de type titanate de lithium,
c) obtention du composé de type phosphate de lithium et de métal de transition ou du composé de type titanate de lithium ou du mélange précurseur et/ou de la suspension de précurseur qui est ensuite traité(e) thermiquement et les contaminants magnétiques sont ensuite éliminés de celui/celle-ci,
un broyage et/ou un tamisage à l'air du produit obtenu ayant lieu après l'étape c) et les contaminants magnétiques étant éliminés du produit après le broyage et/ou le tamisage à l'air, l'élimination des contaminants magnétiques ayant lieu, pendant le procédé, au moyen d'aimants et l'élimination des particules non dissoutes ou non mises en suspension ayant lieu par filtration ou tamisage au moyen d'un filtre, d'un crible ou d'un tamis.

2. Procédé selon la revendication 1, un autre composé de départ, qui est un composé contenant du carbone, étant ajouté dans l'étape a).

3. Procédé selon la revendication 1, dans lequel, après l'obtention du composé de type phosphate de lithium et de métal de transition purifié ou du composé de type titanate de lithium purifié dans l'étape c), celui-ci est mélangé avec un composé contenant du carbone, suite à quoi une suspension ou un mélange est obtenu(e).

4. Procédé selon l'une quelconque des revendications 1 à 3, le traitement thermique comprenant une étape de séchage.

5. Procédé selon la revendication 4, une étape de granulation étant effectuée après l'étape de séchage.

6. Procédé selon la revendication 5, une étape de calcination étant effectuée après l'étape de granulation.

7. Procédé selon la revendication 6, un broyage et/ou un tamisage à l'air du produit obtenu ayant lieu après l'étape de calcination.

8. Procédé selon la revendication 2 ou 3, le composé contenant du carbone étant choisi parmi les hydrocarbures, les monomères, les polymères, le polycyclène, les polyoléfines, les polybutadiènes, les poly(alcools vinyliques), les phénols, les styrènes, les naphtalènes, les pérylènes, les acrylonitriles, les acétates de vinyle, la cellulose, le brai, le goudron, les sucres, l'amidon ainsi que leurs esters, éthers, acides ou dérivés correspondants.

9. Procédé selon l'une quelconque des revendications précédentes, l'étape de séchage étant effectuée à 80-150°C.

10. Procédé selon la revendication 6, une étape de calcination étant effectuée à 500-1000°C.

11. Procédé selon l'une quelconque des revendications précédentes, le produit étant dispersé ou broyé pendant la conversion dans l'étape b).

12. Procédé selon la revendication 1, la conversion ayant lieu à une température de 100 à 160°C et à une pression de 1 bar.

13. Procédé selon l'une quelconque des revendications précédentes, le métal de transition de la source de métal de transition étant choisi dans le groupe constitué par Ti, Cr, Mn, Fe, Co, Ni, Cu, Ru, Zn ou des mélanges correspondants.

14. Procédé selon la revendication 13, une source de métal, choisie parmi Ca, Mg, Zn, Sn, Sb, As, Bi et des mélanges correspondants étant également ajoutée dans l'étape a).
